# EUROPEAN PATENT APPLICATION

(11) **EP 1 956 163 A2**
(43) Date of publication of application: **13.08.2008**
(21) Application number: 08151210.5
(22) Date of filing: 08.02.2008
(51) Int. Cl.: E04G 21/32

(54) **Safety attachment to be fitted on a roof**

(30) Priority: 08.02.2007 NL 2000482
(71) Applicant: DAKTARI V.O.F., 3707 TB Zeist (NL)
(72) Inventor: Borra, Hans Antonius, 3707 TB, Zeist (NL); Berlee, Anthonie Bernardus, 3731 GC, De Bilt (NL)
(74) Representative: van Westenbrugge, Andries

(57) **Abstract**

Assembly for providing an anchorage point on a roof (20). The assembly is made up of a supporting plate which is to be fitted at the position of a beam or the like. Viewed in the outward direction, a filling block (4) is then fitted on said supporting plate, on which filling block a cover plate is fitted, which cover plate (6) serves as a seal of the roof (20). Said cover plate (6) is provided with a protuberance (7) into which the filling block (4) fits. Said protuberance (7) is preferably produced beforehand by deep drawing in the factory. On the outside a retaining sleeve (9) is placed on the protuberance (7), and a plate-type part (11) such as an attachment part is fitted on said retaining sleeve. All this is then fixed to the beam by means of a bolt. The cover plate (6) is made of a deformable material which can be adapted to the remaining covering parts on the roof (20). Two protuberances (7) may be present in the cover plate (6), with the same number of filling blocks (4) and retaining sleeves (9) if desired. This makes it possible to provide an attachment (16) in a simple manner, to which attachment (16) a complementary attachment part (32) can be fixed in a detachable manner, which part in turn can be provided with a belt and the like for persons to work safely on the roof or to fix all kinds of structures to it.

## Description

The present invention relates to a method according to the preamble of Claim 1.

Such a method is known from Fig. 2 of WO 94/17261.

In the case of tall buildings, particularly those with sloping roofs, safety is imperative for persons working on the roof. Hooks which are known in the prior art can be fitted for this purpose, which hooks project through the roof covering, and to which hooks a safety belt or safety harness can be fixed. Such hooks are generally made of bronze and are in the form of a hook-shaped part with a fixing end which has to be fixed by means of bolts to the roof structure. It is, of course, important here for the hook to be fitted in such a way that no leakage occurs in the roof. In this case roof covering present at the position of the fixing beam is removed and a replacement cover plate normally made of lead or zinc is fitted first. The hook is fixed on this plate by means of bolts, and a further cover plate is then fitted on top of this, extending above the fixing point and over the fixing point, in order to provide watertightness. This plate is usually a plate-shaped part made of lead material which is carefully hammered around the hook. This fitting requires great expertise on the part of the roofer. The hook extends a considerable distance downwards relative to its fixing point. When a load is placed on the hook a tilting moment will arise as a result, which tilting moment tends to pull the fixing bolts out of the roof boarding or the roof. For that reason, the fixing bolts have to meet extremely high standards, and it often cannot be guaranteed for a longer period of time that the required strength can be achieved.

The structure according to WO 94/17261 is based on a roof element which is made of, for example, lead and after it has been placed resting on the batten concerned, the desired boss is produced on site by hammering or in another way so as to provide water drainage. The provision of this boss in the cover plate requires great skill and it is, of course, important for the boss to be provided in the correct position, namely at the place where a supporting beam of the roof structure is present underneath the cover plate. Furthermore, it is not possible to make this boss a substantial size because there is otherwise the risk of the metal or other material of the cover plate splitting during the production of such a boss.

It is the object of the present invention to provide a method by means of which unskilled workers are also able to fit an anchorage point for a safety device on a roof in a simple and guaranteed manner.

This object is achieved by the features of Claim 1. Unlike in the method of the prior art, the cover plate is provided with the projecting part beforehand, i.e. already at the production stage in the factory. In the case of metals this is performed by, for example, deep drawing. Such a complicated procedure cannot, of course, be performed reliably on site. This means that the boss according to the invention can have a more pronounced raised character, with the result that the water drainage capacity is better ensured. Moreover, it is also thereby ensured that the wall thickness of the material of the boss is or elevation uniform, so that additional sealing with the filling block is ensured already with slight clamping. The fact is that when the boss or elevation is produced on site there is a risk of its wall thickness not being uniform, with the result that whilst clamping does occur between filling block and boss, that clamping is not achieved around the entire periphery, so that watertightness cannot be ensured. These problems are solved with the present invention.

Starting from a cover plate in which the projecting part has already been provided, the cover plate is of such size that in principle it is universally usable. On site, the surplus part of the cover plate can either be placed lying underneath the rest of the roof covering or over the top of it. However, it is also possible to adjust the dimensions of the cover plate by a simple cutting operation.

Such a cover plate is used in particular as a replacement for a roof element. In other words, the present invention is used in particular for roof coverings consisting of a number of roof elements such as slate pieces, wherein one or more of the roof elements such as slate pieces is/are removed and replaced by the cover plate according to the present invention. In other words, the cover plate according to the present invention has considerable dimensions, being preferably at least 10 x 10 cm, and more particularly at least 20 x 20 cm.

It is a further object of the present invention to provide an anchorage point for a safety device on a roof, the roof being provided with an insulating layer. As indicated above, it is preferable for a seal to be achieved between the cover plate and the filling block. Said seal is produced by clamping these two parts together. If this clamping force is transmitted by the roof structure to a supporting beam lying underneath, this means that the insulation lying between the roof boarding and the supporting beam is subjected to that stress (pressure force), which is undesirable. In order to solve this problem, according to a further aspect of the present invention, a device with the features of Claim 4 is provided.

According to the present invention, it is proposed that standard parts be worked with as far as possible. On the one hand, this makes it possible to reduce the cost considerably while, on the other hand, the use of a plate-type part such as an attachment part means that the tilting moment between the anchorage point (the plate-type part) and the roof structure is considerably reduced. By making use of universal parts, it is ensured that considerably less skill is required by the person placing the assembly.

The fitting of the assembly can be simplified even further if according to a special embodiment of the invention a supporting plate is first fitted on the roof boarding or the like and the abovementioned cover plate and the filling means/filling sleeve are then fitted. This is because such a supporting plate can have considerably smaller dimensions than the cover plate and can be positioned accurately at the point where the forces have to be introduced into the roof structure. Such a supporting plate can introduce the forces of the plate-type part/attachment part over a greater surface area in the roof structure, with the result that the peak load is reduced. According to a special embodiment of the invention, two apertures are used, through which apertures two fixing bolts are fitted in the roof structure. These two apertures are preferably positioned horizontally at a distance from each other, particularly in the case of roofs with longitudinal beams.

The cover plate is preferably made of a material which is easily deformed and has a reasonable service life. Apart from plastic materials, zinc and lead meet this purpose.

The seal between the bulged parts in the cover plate and the attachment part can be further improved if a retaining sleeve is provided between them. The conicity and further design of the filling block and the retaining sleeve are selected in such a way that the material of the cover plate placed between them seals in the optimum manner relative to these parts.

As already described above, the plate-type part can be embodied to comprise an coupling part. A corresponding complementary coupling part can be fitted on a safety provision such as a safety belt or safety harness of the person who is present on the roof concerned. However, it is also possible to fasten other parts to it, for example scaffolding parts and other structures. The patentee's publication PCT/NL 2005/00251 is referred to as an example of a detachable coupling. It should be understood that other coupling or attachment structures are possible. Moreover, the plate-type part can be designed in such a way that a ladder can be hooked up behind it, so that such a ladder is suspended safely from a roof structure. Of course, this applies only in the case of a sloping roof. The use of the invention is not, however, limited to a sloping roof, but also covers a flat roof and/or exterior walls.

The invention also relates to a roof structure provided with the abovementioned assembly.

The structure according to the present invention can be fitted in a simple manner, as indicated above. Starting from a cleared part of a roof on which the assembly is to be fitted, on the basis of a nail pattern or in another customary manner, the positioning of a beam or another support lying underneath the roof boarding is established and the supporting plate placed above it. In those cases where no beam is present at that point, it is possible to achieve a supporting point on the inside of the roof by means of an auxiliary structure. After the provisional placing of the supporting plate, the filling block, the cover plate, the retaining sleeve and the plate-type part can be fitted on top. If a fixing bolt already extends from the roof structure, these parts can simply be slid on. This is the case in particular if the fixing means such as bolts are fitted all the way through in the beam. In that case it is easily possible from the inside to make an aperture extending all the way through, so that it is always guaranteed that this aperture is also made precisely in the strongest part of the beam. After the various parts have been fitted, the plate-type part can be tensioned against the roof structure by tightening the fixing means. These fixing means can also comprise coach screws or the like after the plate-type part has been fitted in position. The aperture in the plate-type part in which the fixing means are fitted can be closed by a plug if desired.

The invention will be explained in greater detail below with reference to exemplary embodiments shown in the drawing, in which:
Fig. 1 shows diagrammatically a disassembled assembly according to the invention;
Fig. 2 shows the assembly according to the invention in combination with a roof structure in cross section during the fitting of said assembly;
Fig. 3 shows the structure according to Fig. 2 during completion of the roof covering and during the attachment of a safety belt;
Fig. 4 shows an alternative to fixing of the assembly according to Fig. 1; and
Fig. 5 shows an alternative to the structure according to the earlier figures in an insulated roof.

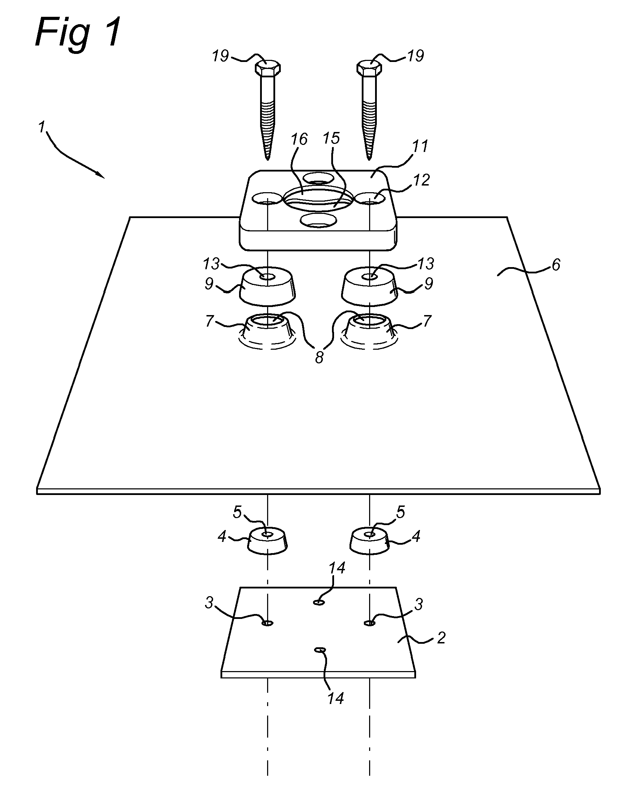

The assembly according to the present invention is indicated in its entirety by 1 in Fig. 1. It comprises a supporting plate 2 provided with main apertures 3 for receiving fixing means such as coach screws 19. Auxiliary apertures 14 are present for temporarily fitting nails and screws for the temporary positioning of the supporting plate on roof boarding. These auxiliary apertures 14 can be used as main apertures when fixing vertical supports (rafter roof).

The assembly furthermore comprises two filling blocks 4, which are provided with apertures 5 and in the position shown are embodied to taper upwards. In addition, a cover plate 6 made of a weather-resistant material such as lead is shown. This cover plate is provided with two protuberances 7, the distance between the apertures 8 corresponding to the distance between the apertures 3.

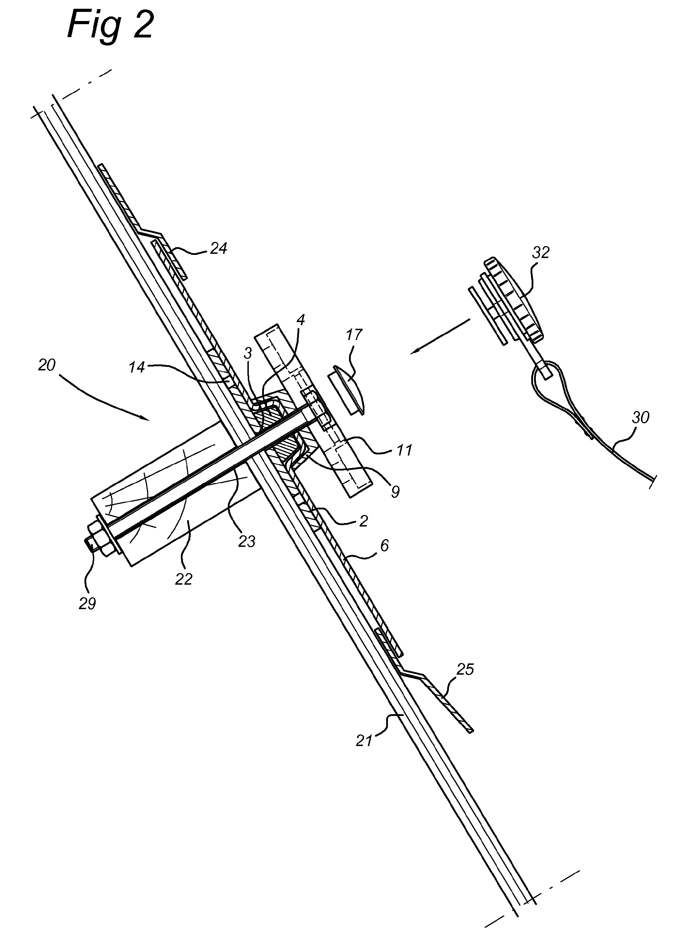

Retaining sleeves 9 are also present, likewise provided with apertures, which are indicated by 13. Above that, a plate-type part or attachment part 11 provided with apertures 12 and some kind of connecting structure is indicated, in the example shown a slot 15 lying inside a recessed part 16 and an opening 16 lying underneath it (see Fig. 2).

The above is embodied to receive coach screws 19.

Fig. 2 shows the fixing of this structure to a roof structure 20. The roof structure comprises a horizontal beam 22 and roof boarding 21. A through hole 23 extends through the beam 22, in this case for receiving a bolt or threaded end 29 which replaces the coach screw 19 mentioned earlier. Supporting plate 2 is fitted, possibly after the removal of existing roof covering. Supporting plate 2 is relatively small compared with cover plate 6. It serves only for uniform distribution of the forces acting in the assembly over the roof boarding/the beam. If bolts 29 are already present, the supporting plate can be pushed through the apertures 3 onto these bolts 29. In all other cases it is preferable to fit nails or screws through the auxiliary apertures 14, for temporary positioning of the supporting plate 2 relative to the roof boarding. The filling block is then fitted, followed by the cover plate 6 (this can be performed in one step if desired) with or without the retaining sleeve 9 already being present on the cover plate. After that, the attachment part 11 is fitted and the fixing means, which is either the through bolt 29 or a coach screw 19, is tightened, with the result that the attachment part 11 is drawn towards beam 23. Through the shape of the filling block, which is conical on the outside, and the retaining sleeve 9, which is conical on the inside, the material of the cover plate lying between them and projecting slightly relative to the remaining surface of the cover plate is gripped in a sealing manner. In other words, should water go into the raised part, it is not possible for it to pass into the roof structure because of the seal achieved in the manner described above. Further sealing means can be present to ensure this seal. After the attachment part 11 has been fixed in the correct position, a cap 17 is fitted in order to close off the opening in which the bolt 29 is fitted. It will be understood here that it is also possible to screw a threaded end into a blind aperture for the attachment part, and to fix the above from the inside.

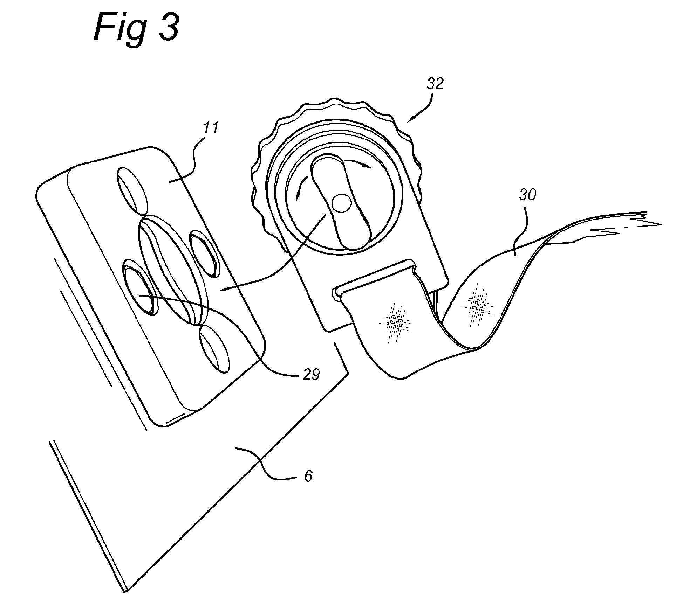

After this work has been carried out, it is possible to make the roof structure watertight by fitting a covering part 24 on top and a covering part 25 underneath. The structure is then ready for use. As can be seen from Figure 3, it is possible to connect a safety belt 30 to it, said safety belt consisting of a strap which can be attached to a harness, scaffolding structure or the like and a complementary attachment part 32 connected to it, which can interact with the attachment part 11. Connection or disconnection can be achieved by a simple turning movement such as that described in the earlier PCT application of the patentee. However, it must be clear that other connecting structures are also possible.

With the attachment part 11 projecting relative to the remainder of the roof covering, it is possible to hook up a plate of a ladder behind it, so that said ladder is fixed securely to a roof structure.

Forces acting upon the structure described above act directly upon the plate-type part, the distance between the anchorage point and the bolts 19/29 being relatively short, so that only a slight moment acts upon the assembly according to the invention.

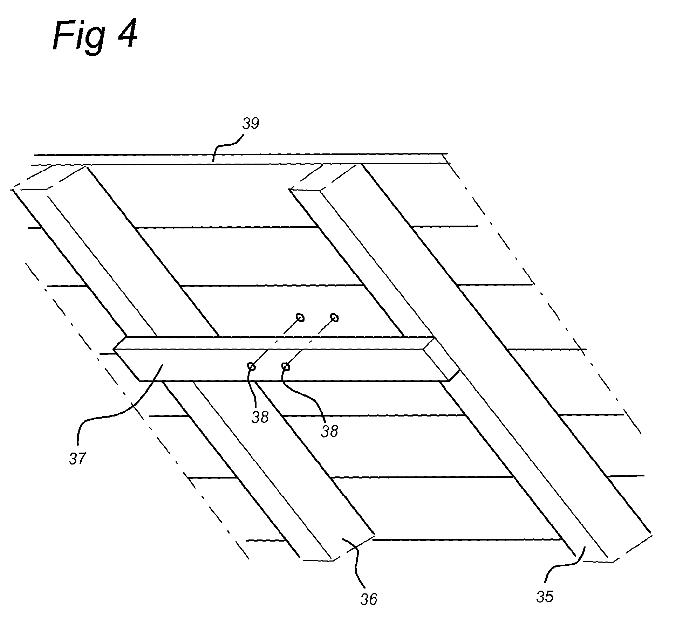

Fig. 4 shows a variant, in which either a rafter roof is present or it is desirable to fit the assembly in a position in which no beam is present behind it. Two beams 35 and 36 lying at a distance from each other are present, extending vertically in a sloping manner. According to this variant of the invention, a substantially horizontally extending auxiliary beam 37 is provided between them, provided with apertures 38, the spacing of which corresponds exactly to the spacing between the apertures 3. The roof boarding is indicated by 39. The assembly according to the invention can be fitted on said roof boarding in the manner described above. It will be understood that the auxiliary beam 37 can also be placed between beams 35 and 36, or even in front of them, i.e. directly behind the roof boarding 39.

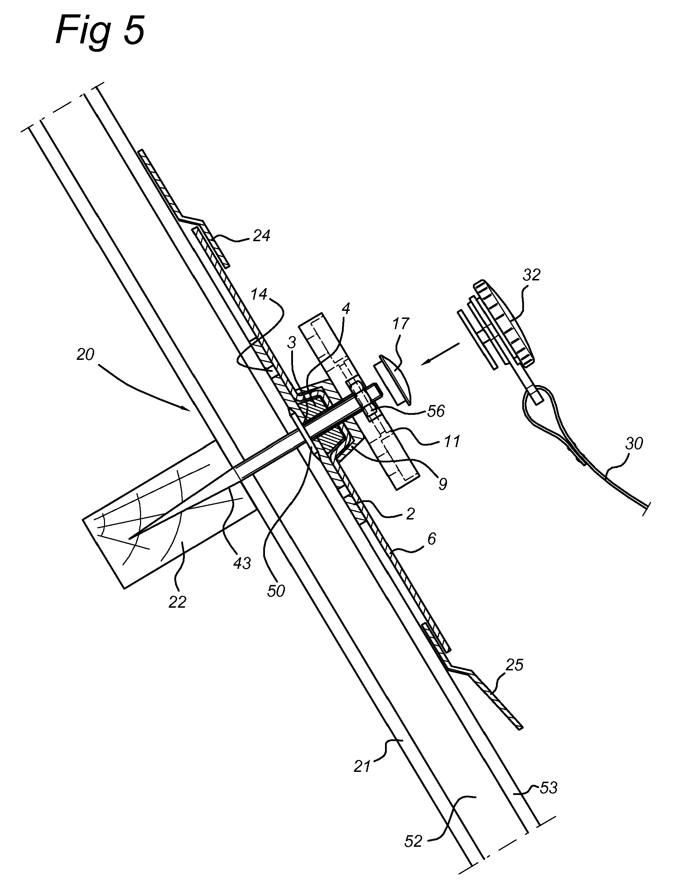

Fig. 5 shows a variant of the present invention in which the reference numerals of the parts which have not changed from those of the earlier embodiments have been taken over.

Deviating from to the earlier embodiment of the invention, this embodiment is used on an insulated roof. Boarding 21 lies on beam 22, on top of which boarding an insulation sheet 52 is placed, on which insulating sheet rests a protective sheet 53, on which the roof covering such as the roof elements 24 and 25 are fitted in some way. The roof elements 24, 25 can comprise slate pieces, tiles and other roof elements. If the roof elements are of relatively limited size, the cover plate 6 is preferably of the same limited size. In the earlier variant a pressure force was transmitted from plate 11 to beam 22 by means of the bolt fixed in beam 22. Owing to the presence of not very sturdy insulation 52 in this case, this could lead to the insulation being compressed. A threaded rod 43 which can be screwed into the beam 22 must be used in this case. This threaded rod is provided with a shoulder 50 which is fastened to it. Threaded rod 43 is screwed so far into the roof that shoulder 50 rests securely against sheet 53, but does not place any exceptionally high stress upon it. Supporting plate 2, filling block 4, cover plate 6 in which, as in the previous example, the protuberance 7 has been made in the factory, retaining sleeve 9 and plate 11 are then fitted over the threaded end in the manner described. After that, nut 56 is tightened in order to produce tension between filling block 4 and retaining sleeve 9, in order to receive the projecting part 7 in a sealing manner. Any threaded rod projecting beyond nut 56 can be removed, after which cap 17 is fitted.

As in the embodiment described above, the place where the anchorage point 11 is to be fitted is first sought, in other words a place is sought on the roof where there is sufficient strength to take threaded rod 43. On the basis of this, cover plate 6 is fitted in the manner described above. Cover plate 6 is dimensioned in such a way that sufficient material is always present in the upward, downward and lateral directions to cover a further roof element such as 24, 25. Any surplus material can be removed easily by trimming, cutting or the like off the cover plate. Through the presence of the threaded rod 43, in principle sufficient fixing of the cover plate 6 is guaranteed, but it is always possible to provide further fixing, for example underneath the overlapping part of roof element 24.

Variants will immediately spring to mind for the person skilled in the art after reading of the above description. These variants relate in particular to the design of the plate-type part. All kinds of attachment structures for fixing a safety belt or strap can be used here. Moreover, the seal between the cover plate and the plate-type part can be ensured in another way, it being possible to integrate one or more of the parts described above in the supporting plate, the cover plate or the attachment part. These and further variants lie within the scope of the appended claims.

## Claims

1. Method for fitting an anchorage point (11) for a safety device (30) on a roof (20), comprising the provision of a roof covering comprising a deformable cover plate (6), which cover plate is accommodated in the remaining roof covering (24, 25), in the fitted position a first aperture (8) being made through the cover plate (6) in an outwardly projecting part (7) of said cover plate, and a filling block (4) being fitted on the inside in said projecting part (7), said anchorage point (11) comprising a plate-type part (11) provided with a second aperture (12), said first and second apertures (8, 12) being made over each other so as to lie in line with each other, and a seal being provided between said plate-type part (11) and the projecting part (7), **characterized in that** before the fitting of the cover plate (6) said cover plate is already provided with an outwardly projecting part (7) provided with said first aperture (8), and **in that** during the fitting said outwardly projecting part (7) is placed in the desired position, after which the remaining part of the cover plate is adapted to the rest of the roof covering.

2. Method according to Claim 1, wherein said projecting part (7) of the cover plate is produced beforehand by deep drawing.

3. Method according to one of the preceding claims, wherein said adaptation of said cover part comprises removal of a peripheral part thereof by trimming or cutting.

4. Assembly (1) comprising an anchorage point (11) for a safety device (30) to be fixed on a roof (20) and a roof covering at the position of the anchorage point, which roof covering comprises a cover plate (6) provided with an outwardly projecting part (7) provided with a first aperture (8) and a filling block (4) fitted on the inside in said aperture, and in that said anchorage point (11) comprises a plate-type part (11) provided with a second aperture (12), said first and second apertures being made over each other so as to lie in line with each other, and a seal being provided between said plate-type part (11) and the projecting part (7), **characterized in that** said fixing means (43) comprises a shoulder (50) for supporting said filling block.

5. Assembly according to Claim 4, comprising a supporting plate (2) to be fitted underneath said cover plate (6), which cover plate is provided with a third aperture (3) lying in line with said first and second apertures.

6. Assembly according to Claim 4, or 5, wherein said cover plate comprises a lead or zinc material.

7. Assembly according to one of Claims 4-6, wherein said seal between said plate-type part (11) and the projecting part (7) comprises a retaining sleeve (9) fitted between them.

8. Assembly according to one of Claims 4 - 7, comprising two projecting parts (7) lying at a distance from each other, said plate-type part (11) being common to those parts.

9. Assembly according to Claims 4-8, comprising a complementary attachment part (32) embodied for detachable interaction with said attachment part.

10. Assembly according to one of Claims 4 - 9, comprising two projecting parts (7) lying at a distance from each other, comprising a beam (22) and boarding (21) placed on top of it, which boarding comprises a number of roof elements.

11. Assembly according to one of Claims 4 - 10, wherein the dimensions of said cover plate substantially correspond to those of a roof element, and fixing means (19, 43) extending into said beam.

12. Assembly according to Claim 11, wherein when in use said parts (7) lying at a distance from each other are fitted substantially in a horizontal line.

13. Roof covering consisting of ceramic material parts giving watertightness, one of said ceramic material parts being replaced by the assembly of one of the preceding Claims 1 - 10.
